# EUROPÄISCHE PATENTSCHRIFT

(11) **EP 3 069 428 B1**
(45) Veröffentlichungstag und Bekanntmachung des Hinweises auf die Patenterteilung: **12.12.2018**
(21) Anmeldenummer: 15700531.5
(22) Anmeldetag: 05.01.2015
(51) Int. Cl.: H02J 3/36, H02B 5/01, H02H 7/10, H02H 7/22

(54) **HOCHSPANNUNGSGLEICHSTROM-ÜBERTRAGUNGSSYSTEM MIT ERDUNGSSCHALTER**
HVDC TRANSMISSION SYSTEM WITH GROUNDING SWITCH
SYSTÈME DE TRANSMISSION À HAUTE TENSION, EN COURANT CONTINU AVEC INTERRUPTEUR DE MISE À TERRE

(30) Priorität: 16.01.2014 DE 102014200693
(43) Veröffentlichungstag der Anmeldung: 21.09.2016
(73) Patentinhaber: Siemens Aktiengesellschaft, 80333 München (DE)
(72) Erfinder: ZHANG, Donghui, 91058 Erlangen (DE)
(86) Internationale Anmeldenummer: PCT/EP2015/050034
(87) Internationale Veröffentlichungsnummer: WO 2015/106979

(56) Entgegenhaltungen:
- WO-A1-2007/084034
- WO-A1-2008/112907
- US-A- 3 968 419
- SIEMENS: "High Voltage Direct Current Transmission - Proven Technology for Power Exchange", -, 1. Januar 2011 (2011-01-01), XP055184986,

## Beschreibung

Die Erfindung betrifft eine Hochspannungsgleichstrom-Übertragungsstrecke (HGÜ-Strecke) und ein Verfahren zum Betrieb einer HGÜ-Strecke.

Grundlagen betreffend die Hochspannungsgleichstromübertragung (HGÜ), insbesondere HGÜ-Konfigurationen, sind z.B. der Informationsbroschüre "High Voltage Direct Current Transmission - Proven Technology for Power Exchange" der Siemens AG, im Internet zu finden unter http://www.energy.siemens.com/hq/pool/hq/powertransmission/HVDC/HVDC_Proven_Technology.pdf, dargestellt. Hierin sind auch die Funktionen unterschiedlicher Schalter, z.B. vom Typ HSNBS, HSGS und MRTB beschrieben.

Zur Übertragung elektrischer Energie über mehr als 1500 km von Kraftwerken in große urbane Bereiche wird beispielsweise eine Hochspannungsgleichstromübertragung im Ultrahochvoltbereich (UHVDC) eingesetzt.

Sofern hierfür die übliche Gleichstromkonfigurationen mit zwei Anschlüssen verwendet wird, ist es erforderlich, dass das Wechselstromnetz (auch bezeichnet als AC-System), das über HGÜ-Leitungen angebunden wird, entsprechend ausgelegt wird, um Störungen des HGÜ-Systems entsprechend aushalten zu können.

Gegenwärtig gibt es zwei unterschiedliche HGÜ-Systeme mit mehreren Anschlüssen:
Gemäß einer parallelen Konfiguration werden Umrichter eines Pols für alle Anschlüsse zwischen 0V und der vollen Gleichspannung parallel geschaltet. Gemäß einer seriellen Konfiguration werden alle Konverter zwischen 0V und der vollen Gleichspannung in Reihe geschaltet.

Hierbei ist es von Nachteil, dass diese Konfiguration für bestimmte Einsatzgebiete aufwändig, unflexibel und teuer ist. Die Aufgabe der Erfindung besteht darin, die vorstehend genannten Nachteile zu vermeiden und insbesondere eine kosteneffiziente und flexible Alternative bereitzustellen. Diese Aufgabe wird gemäß den Merkmalen der unabhängigen Ansprüche gelöst. Bevorzugte Ausführungsformen sind insbesondere den abhängigen Ansprüchen entnehmbar.

Durch den vorliegenden Ansatz ist es möglich, die beiden HGÜ-Stationen, die mit den beiden Polen (HGÜ-Leitungen) der HGÜ-Strecke verbunden sind, separat voneinander zu platzieren, wobei die Verbindung zwischen den beiden HGÜ-Stationen durch Niederspannungsleitungen realisiert sein kann. Durch eine geeignete Beschaltung bzw. Nutzung der beiden Leitungen ist es möglich, z.B. im Fehlerfall, eine Ableitung des Stroms über die Erde oder über beide HGÜ-Leitungen zu erreichen.
Hierbei ist es von Vorteil, dass der Einfluss der HGÜ-Strecke auf das Wechselstromnetz verringert werden kann, indem die Leistung an den beiden Polen der HGÜ-Strecke flexibel auf mehrere HGÜ-Stationen aufgeteilt werden kann, die an unterschiedlichen Orten aufgestellt sein können.
Es wird eine HGÜ-Konfiguration mit vier Anschlüssen vorgeschlagen, die eine ökonomische und effiziente Leistungsübertragung ermöglicht.
Hierbei sei angemerkt, dass die HGÜ-Station eine oder mehrere Komponenten aufweisen kann. Auch die Teile der HGÜ-Station können jeweils in einer oder in mehreren Komponenten realisiert sein. Das gilt z.B. auch für die nachfolgend erläuterten Schalter: So kann beispielsweise ein Schalter eine oder mehrere Schaltfunktionen wahrnehmen. Umgekehrt können mehrere Schalter auch in Form eines einzelnen physikalischen Schalters realisiert sein.
Die Ausführungen betreffend die Vorrichtung gelten für das Verfahren entsprechend.

Insbesondere ist es eine Weiterbildung, dass die erste HGÜ-Leitung und/oder die zweite HGÜ-Leitung um einen Faktor 2 bis 20 länger ist/sind als mindestens eine der HGÜ-Leitungen.

Die erste HGÜ-Station und die zweite HGÜ-Station sind getrennt voneinander angeordnet. Es liegen einige zehn Kilometer Entfernung zwischen den beiden HGÜ-Stationen.

Ferner ist es eine Weiterbildung, dass die erste HGÜ-Station und die zweite HGÜ-Station jeweils aufweist
- mindestens ein Wechselstromsystem,
- einen ersten Schalter, anhand dessen das mindestens eine Wechselstromsystem überbrückbar ist,
- einen zweiten Schalter, anhand dessen die Verbindung zu der Leitung, die mit der Elektrode verbunden ist, schaltbar ist,
- einen dritten Schalter, anhand dessen die Verbindung zu der anderen Leitung, die nicht mit der Elektrode verbunden ist, schaltbar ist.

Insbesondere weist jede der HGÜ-Stationen eine Einheit zur Ansteuerung ihrer Schalter auf. Diese Einheit kann die Schalter der HGÜ-Station in Abhängigkeit von Zuständen und/oder Messungen ansteuern und somit unterschiedliche Strompfade in der HGÜ-Station aktivieren.

Eine nächste Weiterbildung besteht darin, dass der zweite Schalter und/oder der dritte Schalter Hochleistungsschalter sind.

Anhand des Hochleistungsschalters kann beispielsweise schnell und/oder unter Last geschaltet werden.

Eine Ausgestaltung ist es, dass die erste HGÜ-Station und die zweite HGÜ-Station einen Schalter aufweist, der eine Verbindung zur Erde herstellt.

Dies kann mittels eines schnell schaltenden Erdungsschalters (HSGS: "High Speed Ground Switch") erreicht werden, der die HGÜ-Station mit Erde verbinden kann, falls der Pfad zu dem Erdpotential isoliert wurde.

Die Schritte des Verfahrens können z.B. von einer Verarbeitungseinheit ausgeführt werden, die getrennt zu der jeweiligen HGÜ-Station oder zusammen mit dieser ausgeführt sein kann. Beispielsweise kann eine Verarbeitungseinheit vorgesehen sein, die eine oder mehrere HGÜ-Stationen ansteuert. Auch ist es möglich, dass mehrere Verarbeitungseinheiten pro HGÜ-Station vorgesehen sind. Die Verarbeitungseinheit kann als eine Prozessoreinheit und/oder eine zumindest teilweise festverdrahtete oder logische Schaltungsanordnung ausgeführt sein, die beispielsweise derart eingerichtet ist, dass das Verfahren wie hierin beschrieben durchführbar ist. Besagte Verarbeitungseinheit kann jede Art von Prozessor oder Rechner oder Computer mit entsprechend notwendiger Peripherie (Speicher, Input/Output-Schnittstellen, Ein-Ausgabe-Geräte, etc.) sein oder umfassen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.

Es zeigen:
- Fig.1: eine beispielhafte bipolare HGÜ-Konfiguration mit vier HGÜ-Stationen;
- Fig.2: eine beispielhafte Ansicht des senderseitigen HGÜ-Systems aus Fig.1;
- Fig.3: eine beispielhafte Ansicht des empfangsseitigen HGÜ-Systems aus Fig.1.

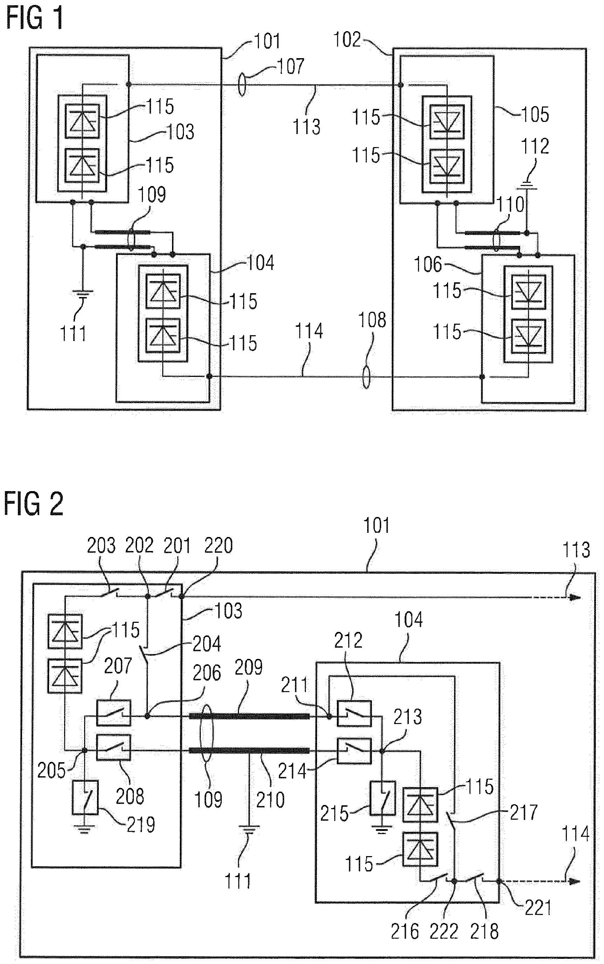

Fig.1 zeigt schematisch eine beispielhafte bipolare HGÜ-Konfiguration (auch bezeichnet als Hochspannungsgleichstrom-Übertragungsstrecke oder HGÜ-Strecke) mit vier HGÜ-Stationen 103 bis 106. In einem bipolaren HGÜ-System sind einem Pol 107 die HGÜ-Stationen 103 und 105 und einem Pol 108 die HGÜ-Stationen 104 und 106 zugeordnet. Die HGÜ-Stationen 103 und 104 sind Teil eines HGÜ-Systems 101 (hier beispielhaft auch als Sender bezeichnet) und die HGÜ-Stationen 105 und 106 sind Teil eines HGÜ-Systems 102 (hier beispielhaft auch als Empfänger bezeichnet).

Die HGÜ-Stationen 103 bis 106 weisen jeweils mindestens einen Konverter (Umrichter) zum Anschluss eines Wechselstromnetzes auf. Beispielsweise können sogenannte modulare Multilevel-Umrichter (MMC: "Modular Multilevel Converter") eingesetzt werden, deren Grundbaustein meist eine sogenannte Halbbrücke aus IGBT und Dioden ist. Dieser Grundbaustein wird auch als Submodul (auch: Konvertermodul) bezeichnet. Es ist bekannt, eine Vielzahl solcher Submodule in Reihe zu schalten, um eine Hochspannungsfestigkeit zu erreichen. Der Konverter kann einen Gleichrichter und einen Umrichter aufweisen und in der HGÜ-Station angeordnet sein. Entsprechend ist mit dem Bezugszeichen 115 ein Wechselstromsystem (AC-System) bzw. eine Anbindung an ein Wechselstromnetz gekennzeichnet. Beispielhaft sind in den Figuren zwei AC-Systeme 115 pro HGÜ-Station in Reihe geschaltet. Dies entspricht nur einer symbolischen Betrachtung, es können auch z.B. nur ein AC-System oder eine beliebige Vielzahl von AC-Systemen pro HGÜ-Station vorgesehen sein. Insbesondere können unterschiedliche Anzahlen von AC-Systemen pro HGÜ-Station vorgesehen sein.

Die HGÜ-Station 103 ist mit der HGÜ-Station 105 über eine HGÜ-Leitung 113 verbunden und die HGÜ-Station 104 ist mit der HGÜ-Station 106 über eine HGÜ-Leitung 114 verbunden. Die HGÜ-Leitungen 113 und 114 können unterschiedlich lang sein. Beispielsweise können die HGÜ-Leitung 113 und die HGÜ-Leitung 114 jeweils eine Länge von 1500 km bis 2500 km aufweisen. Auch kann beispielsweise die HGÜ-Leitung 113 eine Länge von 1500 km bis 2500 km und die HGÜ-Leitung 114 eine Länge von 1000 km bis 2000 km aufweisen.

Im Vergleich zu einem herkömmlichen bipolaren Gleichstromsystem können im vorliegenden Fall die Pole 107, 108 mit HGÜ-Stationen eines HGÜ-Systems verbunden sein, die örtlich getrennt voneinander angeordnet sind. Die HGÜ-Station 103 ist mit der HGÜ-Station 104 über zwei Leitungen 109 verbunden, wobei eine der Leitungen mit einer Elektrode 111 verbunden und durch diese geerdet ist. Die HGÜ-Station 105 ist mit der HGÜ-Station 106 über zwei Leitungen 110 verbunden, wobei eine der Leitungen mit einer Elektrode 112 verbunden ist (geerdet ist).

Bei den mit den Bezugszeichen 109, 110 gekennzeichneten Leitungen handelt es sich insbesondere jeweils um eine Niederspannungsgleichstrom-Übertragungsleitung. Jede der Leitungen kann beispielsweise eine Länge von hundert oder mehreren hundert Kilometern (z.B. 200 km bis 300 km) haben. Die Entfernungen können basierend auf der Struktur der AC-Systeme gewählt werden.

Fig.2 zeigt eine beispielhafte Ansicht des HGÜ-Systems 101 umfassend die HGÜ-Station 103 und die HGÜ-Station 104.

Die HGÜ-Station 103 ist über einen Anschluss 220 mit der HGÜ-Leitung 113 verbunden. Der Anschluss 220 ist über einen Schalter 201 mit einem Knoten 202 verbunden. Der Knoten 202 ist über eine Reihenschaltung umfassend einen Schalter 203 und zwei AC-Systeme 115 mit einem Knoten 205 verbunden. Der Knoten 205 ist über einen Schalter 207 mit einem Knoten 206 und der Knoten 206 ist über einen Schalter 204 mit dem Knoten 202 verbunden. Der Knoten 205 ist über einen Schalter 219 geerdet. Der Knoten 206 ist über eine Leitung 209 mit einem Knoten 211 der HGÜ-Station 104 verbunden. Der Knoten 205 ist über einen Schalter 208 mit einer Leitung 210 verbunden, das andere Ende der Leitung 210 ist über einen Schalter 214 mit einem Knoten 213 verbunden. Der Schalter 214 und der Knoten 213 sind Teil der HGÜ-Station 104.

Somit verbinden die Leitungen 209 und 210 die HGÜ-Station 103 mit der HGÜ-Station 104. Die beiden Leitungen 209 und 210 sind auch mit einem Bezugszeichen 109 versehen. Bei den Leitungen 209 und 210 handelt es sich insbesondere jeweils um eine Niederspannungsgleichstrom-Übertragungsleitung, die z.B. 200 km bis 300 km lang sein kann. Damit können die HGÜ-Stationen 103 und 104 mehrere hundert Kilometer voneinander getrennt aufgestellt werden. Jede der HGÜ-Stationen 103 und 104 ist insoweit mit einem Pol des HGÜ-Systems umfassend die HGÜ-Leitungen 113 und 114 verbunden. Weiterhin ist die Leitung 210 mit der Elektrode 111 verbunden (geerdet).

In der HGÜ-Station 104 ist weiter der Knoten 211 über einen Schalter 217 mit einem Knoten 222 verbunden. Der Knoten 211 ist über einen Schalter 212 mit dem Knoten 213 verbunden. Der Knoten 213 ist über einen Schalter 215 geerdet. Der Knoten 213 ist über eine Reihenschaltung umfassend zwei AC-Systeme 115 und einen Schalter 216 mit dem Knoten 222 verbunden. Der Knoten 222 ist über einen Schalter 218 mit einem Anschluss 221 verbunden, über den die HGÜ-Station 104 mit der HGÜ-Leitung 114 verbunden ist.

Bei den Schaltern 208 und 214 handelt es sich beispielsweise um Schalter vom Typ MRTB ("Metallic Return Transfer Breaker"), bei den Schaltern 207 und 212 handelt es sich beispielsweise um Schalter vom Typ MRS ("Metallic Return Switch"), und bei den Schaltern 219 und 215 handelt es sich beispielsweise um Schalter vom Typ HSGS ("High Speed Ground Switch").

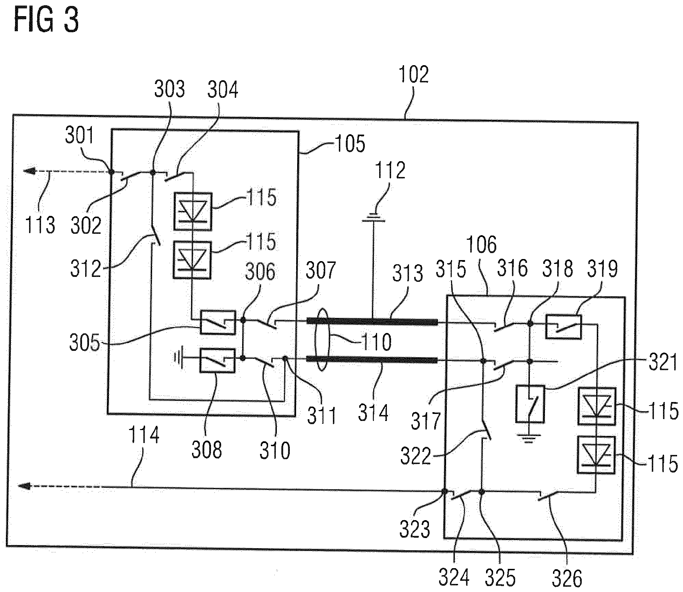

Fig.3 zeigt eine beispielhafte Ansicht des HGÜ-Systems 102 umfassend die HGÜ-Station 105 und die HGÜ-Station 106.

Die HGÜ-Station 105 ist über einen Anschluss 301 mit der HGÜ-Leitung 113 verbunden. Der Anschluss 301 ist über einen Schalter 302 mit einem Knoten 303 verbunden. Der Knoten 303 ist über eine Reihenschaltung umfassend einen Schalter 304, zwei AC-Systeme 115 und einen Schalter 305 mit einem Knoten 306 verbunden. Der Knoten 306 ist über einen Schalter 307 mit einer Leitung 313 verbunden, deren anderes Ende über einen Schalter 316 mit einem Knoten 318 verbunden ist. Der Schalter 316 und der Knoten 318 sind Teil der HGÜ-Station 106. Der Knoten 306 ist über einen Schalter 308 geerdet. Der Knoten 303 ist über einen Schalter 312 mit einem Knoten 311 verbunden. Der Knoten 306 ist über einen Schalter 310 mit dem Knoten 311 verbunden. Der Knoten 311 ist mit einer Leitung 314 verbunden, deren anderes Ende mit einem Knoten 315 der HGÜ-Station 106 verbunden ist.

Somit verbinden die Leitungen 313 und 314 die HGÜ-Station 105 mit der HGÜ-Station 106. Die beiden Leitungen 313 und 314 sind auch mit einem Bezugszeichen 110 versehen. Bei den Leitungen 313 und 314 handelt es sich insbesondere jeweils um eine Niederspannungsgleichstrom-Übertragungsleitung, die z.B. 200 km bis 300 km lang sein kann. Damit können die HGÜ-Stationen 313 und 314 mehrere hundert Kilometer voneinander getrennt aufgestellt werden. Jede der HGÜ-Stationen 105 und 106 ist insoweit mit einem Pol des HGÜ-Systems umfassend die HGÜ-Leitungen 113 und 114 verbunden. Weiterhin ist die Leitung 313 mit der Elektrode 112 verbunden (geerdet).

In der HGÜ-Station 106 ist weiter der Knoten 318 über eine Reihenschaltung umfassend einen Schalter 319, zwei AC-Systeme 115 und einen Schalter 326 mit einem Knoten 325 verbunden. Der Knoten 315 ist über einen Schalter 317 mit dem Knoten 318 verbunden. Der Knoten 318 ist über einen Schalter 321 geerdet. Der Knoten 315 ist über einen Schalter 322 mit dem Knoten 325 verbunden. Der Knoten 325 ist über einen Schalter 324 mit einem Anschluss 323 verbunden, über den die HGÜ-Station 106 mit der HGÜ-Leitung 114 verbunden ist.

Bei den Schaltern 305 und 319 handelt es sich beispielsweise um Schalter vom Typ HSNBS ("High Speed Neutral Bus Switch"), bei den Schaltern 308 und 321 handelt es sich beispielsweise um Schalter vom Typ HSGS ("High Speed Ground Switch").

Anhand der vorgestellten Lösung ist es möglich, neben dem bipolaren Betriebsmodus unter Verwendung der beiden Pole des HGÜ-Systems auch (z.B. im Fehlerfall mindestens eines AC-Systems) einen monopolaren Betriebsmodus zu gewährleisten. Beispiele für monopolare Betriebsmodi sind:
- GR-Modus: die Ableitung über die Elektrode (Erdpotential), dies wird auch als "Ground Return Operation" bezeichnet, und
- MR-Modus: die Ableitung über die HGÜ-Leitung anstatt über die Elektrode, dies wird auch als "Metallic Return Operation" bezeichnet.

Eine Umschaltung zwischen dem GR-Modus und dem MR-Modus wird vorzugsweise gewährleistet, indem z.B. im Hinblick auf Fig.2 die Schalter 207 und 212 vom Typ MRS und die Schalter 208 und 214 vom Typ MRTB sind.

Nachfolgend werden die Betriebsmodi beispielhaft im Hinblick auf Fig.2 beschrieben:
(1) bipolarer Betriebsmodus:
   In der HGÜ-Station 103 sind die Schalter 201, 203 und 208 geschlossen, die Schalter 204, 207 und 219 sind geöffnet. In der HGÜ-Station 104 sind die Schalter 214, 216 und 218 geschlossen, die Schalter 212, 215 und 217 sind geöffnet.
   Somit fließt der Strom über die Verbindung: HGÜ-Leitung 114, Knoten 222, AC-Systeme 115 der HGÜ-Station 104, Knoten 213, Schalter 214, Leitung 210, Schalter 208, AC-Systeme 115 der HGÜ-Station 103, Schalter 203, Schalter 201, HGÜ-Leitung 113.
   Optional kann ein Teil des Stroms über die Elektrode 111 zu- oder abfließen.
(2) GR-Modus ("Ground Return Operation"):
   Es wird ein Fehler in den AC-Systemen 115 der HGÜ-Station 103 angenommen. In diesem Fall fließt kein Strom durch den Pfad mit den AC-Systemen, optional kann der Schalter 203 geöffnet werden/sein.
   Der Schalter 208 wird geöffnet, die unter (1) beschriebene Verbindung ist unterbrochen und der Strom fließt über die Elektrode 111 ab.
(3) MR-Modus ("Metallic Return Operation"):
   Es wird wieder ein Fehler in den AC-Systemen 115 der HGÜ-Station 103 angenommen. In diesem Fall fließt kein Strom durch den Pfad mit den AC-Systemen, optional kann der Schalter 203 geöffnet werden/sein.
   Der Schalter 214 wird geöffnet und die Schalter 212 und 204 werden geschlossen. Damit sind die AC-Systeme 115 der HGÜ-Station 104 über den Schalter 212, die Leitung 209 sowie den Schalter 204 mit der HGÜ-Leitung 113 verbunden. Somit werden beide HGÜ-Leitungen 113, 114 anstatt nur einer HGÜ-Leitung 113 im GR-Modus verwendet.

Hierbei ist es von Vorteil, dass keine kostspieligen Überbrückungsschalter bzw. keine schnellen Hochvoltschalter wie in herkömmlichen Konfigurationen benötigt werden.

Es wird somit vorgeschlagen, einen Pol einer Hochspannungsgleichstrom-Übertragungsstrecke mit einer HGÜ-Station zu terminieren und somit für die beiden Pole der Hochspannungsgleichstrom-Übertragungsstrecke zwei HGÜ-Stationen vorzusehen, die über Niederspannungsleitungen miteinander verbunden sind, wobei eine der Niederspannungsleitungen eine Elektrode aufweist. Somit können die einzelnen Pole der Hochspannungsgleichstrom-Übertragungsstrecke flexibel an unterschiedlichen Orten platziert werden, die Pole werden dann über die Niederspannungsleitungen miteinander verbunden. Diese Architektur ist insbesondere für lange HGÜ-Leitungen von Vorteil und vermeidet, dass die gesamte Leistung einer solchen langen HGÜ-Leitung nur an einem einzigen Ort ankommt.

### Bezugszeichenliste

- 101: HGÜ-System
- 102: HGÜ-System
- 103: HGÜ-Station
- 104: HGÜ-Station
- 105: HGÜ-Station
- 106: HGÜ-Station
- 107: Pol
- 108: Pol
- 109: zwei Leitungen (Niederspannungsgleichstromübertragungsleitungen)
- 110: zwei Leitungen (Niederspannungsgleichstromübertragungsleitungen)
- 111: Elektrode
- 112: Elektrode
- 113: HGÜ-Leitung
- 114: HGÜ-Leitung
- 115: AC-System

- 201: Schalter
- 202: Knoten
- 203: Schalter
- 204: Schalter
- 205: Knoten
- 206: Knoten
- 207: Schalter
- 208: Schalter
- 209: Leitung
- 210: Leitung
- 211: Knoten
- 212: Schalter
- 213: Knoten
- 214: Schalter
- 215: Schalter
- 216: Schalter
- 217: Schalter
- 218: Schalter
- 219: Schalter
- 220: Anschluss
- 221: Anschluss
- 222: Knoten

- 301: Anschluss
- 302: Schalter
- 303: Knoten
- 304: Schalter
- 305: Schalter
- 306: Knoten
- 307: Schalter
- 308: Schalter
- 310: Schalter
- 311: Knoten
- 312: Schalter
- 313: Leitung
- 314: Leitung
- 315: Knoten
- 316: Schalter
- 317: Schalter
- 318: Knoten
- 319: Schalter
- 321: Schalter
- 322: Schalter
- 323: Anschluss
- 324: Schalter
- 325: Knoten
- 326: Schalter

## Patentansprüche

1. Hochspannungsgleichstrom-Übertragungsstrecke
- mit einer ersten HGÜ-Station (103), die mit einem ersten Pol (107) der Hochspannungsgleichstrom-Übertragungsstrecke verbunden ist,
- mit einer zweiten HGÜ-Station (104), die mit einem zweiten Pol (108) der Hochspannungsgleichstrom-Übertragungsstrecke verbunden ist, **gekennzeichnet dadurch, dass** die erste HGÜ-Station (103) mit der zweiten HGÜ-Station (104) über zwei Leitungen (109; 209, 210) verbunden ist,
- wobei eine der Leitungen mit einer Elektrode, wobei es sich um eine Erdung handelt, (111) verbunden ist,
- wobei jede der zwei Leitungen zur Verbindung der ersten mit der zweiten HGÜ-Station eine Niederspannungsleitung ist,
- wobei der der erste Pol der Hochspannungsgleichstrom-Übertragungsstrecke einer ersten HGÜ-Leitung und der zweite Pol einer zweiten HGÜ-Leitung entspricht, wobei die erste HGÜ-Leitung und die zweite HGÜ-Leitung unterschiedlich lang sind und
- wobei die erste HGÜ-Station und die zweite HGÜ-Station in einigen zehn Kilometern Entfernung voneinander angeordnet sind.

2. Vorrichtung nach Anspruch 1, bei der die erste HGÜ-Leitung und/oder die zweite HGÜ-Leitung um einen Faktor 2 bis 20 länger ist/sind als mindestens eine der HGÜ-Leitungen.

3. Vorrichtung nach Anspruch 1 oder 2, wobei die erste HGÜ-Station und die zweite HGÜ-Station getrennt voneinander angeordnet sind.

4. Vorrichtung nach einem der vorhergehenden Ansprüche, bei der die erste HGÜ-Station (103) und die zweite HGÜ-Station (104) jeweils aufweist
- mindestens ein Wechselstromsystem (115),
- einen ersten Schalter (204, 217), anhand dessen das mindestens eine Wechselstromsystem überbrückbar ist,
- einen zweiten Schalter (208, 213), anhand dessen die Verbindung zu der Leitung (210), die mit der Elektrode (111) verbunden ist, schaltbar ist,
- einen dritten Schalter (207, 212), anhand dessen die Verbindung zu der anderen Leitung (209), die nicht mit der Elektrode (111) verbunden ist, schaltbar ist.

5. Vorrichtung nach einem der vorhergehenden Ansprüche, bei der der zweite Schalter und/oder der dritte Schalter Hochleistungsschalter sind.

6. Vorrichtung nach einem der vorhergehenden Ansprüche, bei der die erste HGÜ-Station (103) und die zweite HGÜ-Station (104) einen Schalter (219, 215) aufweist, der eine Verbindung zur Erde herstellt.

7. Verfahren zum Betrieb mindestens einer Hochspannungsgleichstrom-Übertragungsstrecke,
- mit einer ersten HGÜ-Station (103), die mit einem ersten Pol (107) der Hochspannungsgleichstrom-Übertragungsstrecke verbunden ist,
- mit einer zweiten HGÜ-Station (104), die mit einem zweiten Pol (108) der Hochspannungsgleichstrom-Übertragungsstrecke verbunden ist,
- wobei die erste HGÜ-Station (103) mit der zweiten HGÜ-Station (104) über zwei Leitungen (109; 209, 210) verbunden ist,
- wobei eine der Leitungen mit einer Elektrode, wobei es sich um eine Erdung handelt, (111) verbunden ist,
umfassend die Schritte:
- Ansteuern von Schaltern der ersten HGÜ-Station und der zweiten HGÜ-Station, so dass der erste Pol der Hochspannungsgleichstrom-Übertragungsstrecke über mindestens ein Wechselstromsystem der ersten HGÜ-Station, über die Leitung, die mit der Elektrode verbunden ist, und über mindestens einem Wechselstromsystem der zweiten HGÜ-Station mit dem zweiten Pol der Hochspannungsgleichstrom-Übertragungsstrecke verbunden wird, **gekennzeichnet dadurch, dass** falls ein Fehler in dem mindestens einen Wechselstromsystem der ersten HGÜ-Station detektiert wird:
- Ansteuern von den Schaltern der ersten HGÜ-Station, so dass die Verbindung zu der Leitung, die mit der Elektrode verbunden ist, unterbrochen wird,
- Ansteuern der Schalter der ersten HGÜ-Station so, dass der erste Pol der Hochspannungsgleichstrom-Übertragungsstrecke mit der Leitung verbunden wird, die nicht mit der Elektrode verbunden ist, so dass das mindestens eine Wechselstromsystem der ersten HGÜ-Station überbrückt wird, und
- Ansteuern von den Schaltern der zweiten HGÜ-Station, so
- dass das mindestens eine Wechselstromsystem der zweiten HGÜ-Station mit der Leitung verbunden wird, die nicht mit der Elektrode verbunden ist,
- dass die Verbindung zu der Leitung, die mit der Elektrode verbunden ist, unterbrochen wird.

## Claims

1. High-voltage DC transmission path
- having a first high-voltage DC transmission station (103), which is connected to a first pole (107) of the high-voltage DC transmission path,
- having a second high-voltage DC transmission station (104), which is connected to a second pole (108) of the high-voltage DC transmission path,
**characterized in that**
the first high-voltage DC transmission station (103) is connected to the second high-voltage DC transmission station (104) by means of two lines (109; 209, 210),
- wherein one of the lines is connected to an electrode (111), wherein this involves an earthing,
- wherein each of the two lines is a low-voltage line for connecting the first to the second high-voltage DC transmission station,
- wherein the first pole of the high-voltage DC transmission path corresponds to a first high-voltage DC transmission line and the second pole corresponds to a second high-voltage DC transmission line, wherein the first high-voltage DC transmission line and the second high-voltage DC transmission line are of different lengths and
- wherein the first high-voltage DC transmission station and the second high-voltage DC transmission station are arranged at a distance of a few tens of kilometres away from one another. Frei verwendbar

2. Apparatus according to Claim 1, in which the first high-voltage DC transmission line and/or the second high-voltage DC transmission line is/are longer by a factor of 2 to 20 than at least one of the high-voltage DC transmission lines.

3. Apparatus according to Claim 1 or 2, wherein the first high-voltage DC transmission station and the second high-voltage DC transmission station are arranged in a manner separated from one another.

4. Apparatus according to one of the preceding claims, in which the first high-voltage DC transmission station (103) and the second high-voltage DC transmission station (104) each have
- at least one AC system (115),
- a first switch (204, 217), using which the at least one AC system can be bypassed,
- a second switch (208, 213), using which the connection to the line (210) that is connected to the electrode (111) can be switched,
- a third switch (207, 212), using which the connection to the other line (209) that is not connected to the electrode (111) can be switched.

5. Apparatus according to one of the preceding claims, in which the second switch and/or the third switch are heavy-duty circuit breakers.

6. Apparatus according to one of the preceding claims, in which the first high-voltage DC transmission station (103) and the second high-voltage DC transmission station (104) have a switch (219, 215), which establishes a connection to earth.

7. Method for operating at least one high-voltage DC transmission path,
Frei verwendbar
- having a first high-voltage DC transmission station (103), which is connected to a first pole (107) of the high-voltage DC transmission path,
- having a second high-voltage DC transmission station (104), which is connected to a second pole (108) of the high-voltage DC transmission path,
- wherein the first high-voltage DC transmission station (103) is connected to the second high-voltage DC transmission station (104) by means of two lines (109; 209, 210),
- wherein one of the lines is connected to an electrode (111), wherein this involves an earthing,
comprising the following steps:
- actuation of switches of the first high-voltage DC transmission station and of the second high-voltage DC transmission station so that the first pole of the high-voltage DC transmission path is connected to the second pole of the high-voltage DC transmission path by means of at least one AC system of the first high-voltage DC transmission station, by means of the line that is connected to the electrode and by means of an AC system of the second high-voltage DC transmission station,
**characterized in that**
if a fault is detected in the at least one AC system of the first high-voltage DC transmission station:
- actuation of the switches of the first high-voltage DC transmission station so that the connection to the line that is connected to the electrode is interrupted,
- actuation of the switches of the first high-voltage DC transmission station so that the first pole of the high-voltage DC transmission path is connected to the line that is not connected to the electrode so that the at least one AC system of the first high-voltage DC transmission station is bypassed, and
- actuation of the switches of the second high-voltage DC transmission station so that
Frei verwendbar
- the at least one AC system of the second high-voltage DC transmission station is connected to the line that is not connected to the electrode,
- the connection to the line that is connected to the electrode is interrupted.

## Revendications

1. Section de transmission de courant continu de haute tension
- comprenant un premier poste (103) de transmission de courant continu de haute tension, qui est relié à un premier pôle (107) de la section de transmission de courant continu de haute tension,
- comprenant un deuxième poste (104) de transmission de courant continu de haute tension, qui est relié à un deuxième pôle (108) de la section de transmission de courant continu de haute tension,
**caractérisée en ce que**
le premier poste (103) de transmission de courant continu de haute tension est relié au deuxième poste (104) de transmission de courant continu de haute tension par deux lignes (109; 209, 210),
- dans laquelle l'une des lignes est reliée à une électrode (111) qui est d'une mise à la terre,
- dans laquelle chacune des deux lignes de liaison au premier et au deuxième poste de transmission de courant continu de haute tension est une ligne de basse tension,
- dans laquelle le premier pôle de la section de transmission de courant continu de haute tension correspond à une première ligne de transmission de courant continu de haute tension et le deuxième pôle à une deuxième ligne de transmission de courant continu de haute tension, la première ligne de transmission de courant continu de haute tension et la deuxième ligne de transmission de courant continu de haute tension ayant des longueurs différentes et
- dans laquelle le premier poste de transmission de courant continu de haute tension et le deuxième poste de transmission de courant continu de haute tension sont disposés en étant loin l'un de l'autre de quelques dizaines de kilomètres.

2. Système suivant la revendication 1, dans lequel la première ligne de transmission de courant continu de haute tension et/ou la deuxième ligne de transmission de courant continu de haute tension est plus longue d'un facteur de 2 à 20 que au moins l'une des lignes de transmission de courant continu de haute tension.

3. Système suivant la revendication 1 ou 2, dans lequel le premier poste de transmission de courant continu de haute tension et le deuxième poste de transmission de courant continue de haute tension sont disposés en état séparés l'un de l'autre.

4. Système suivant l'une des revendications précédentes, dans lequel le premier poste (103) de transmission de courant continu de haute tension et le deuxième poste (104) de transmission de courant continu de haute tension ont chacun
- au moins un système (115) de courant alternatif,
- un premier interrupteur (204, 217), à l'aide duquel le au moins un système de courant alternatif peut être court-circuité,
- un deuxième interrupteur (208, 213), à l'aide duquel la liaison à la ligne (210), qui est reliée à l'électrode (111), peut être effectuée,
- un troisième interrupteur (207, 212), à l'aide duquel la liaison à l'autre ligne (209), qui n'est pas reliée à l'électrode (111), peut être effectuée.

5. Système suivant l'une des revendications précédentes, dans lequel le deuxième interrupteur et/ou le troisième interrupteur sont des disjoncteurs à grand pouvoir de coupure.

6. Système suivant l'une des revendications précédentes, dans lequel le premier poste (103) de transmission de courant continu de haute tension et le deuxième poste (104) de transmission de courant continu de haute tension ont un interrupteur (219, 215), qui ménage une liaison à la terre.

7. Procédé pour faire fonctionner au moins une section de transmission de courant continu de haute tension,
- comprenant un premier poste (103) de transmission de courant continu de haute tension, qui est relié à un premier pôle (107) de la section de transmission de courant continu de haute tension,
- comprenant un deuxième poste (104) de transmission de courant continu de haute tension, qui est relié à un deuxième pôle
(108) de la section de transmission de courant continu de haute tension,
- dans lequel le premier poste (103) de transmission de courant continu de haute tension est relié au deuxième poste (104) de transmission de courant continu de haute tension par deux lignes (109; 209, 210),
- dans lequel l'une des lignes est reliée à une électrode (111), qui est une mise à la terre,
comprenant les stades :
- commande d'interrupteurs du premier poste de transmission de courant continu de haute tension et du deuxième poste de transmission de courant de haute tension, de manière à relier le premier pôle de la section de transmission de courant continu de haute tension par au moins un système de courant alternatif du premier poste de transmission de courant continu de haute tension, par la ligne, qui est reliée à l'électrode, et, par au moins un système de courant alternatif du deuxième poste de transmis de courant continu de haute tension, au deuxième pôle de la section de transmission de courant continu de haute tension,
**caractérisé en ce que**
si l'on détecte un défaut dans le au moins un système de courant alternatif du premier poste de transmission de courant continu de haute tension :
- on commande les interrupteurs du premier poste de transmission de courant continu de haute tension, de manière à interrompre la liaison à la ligne, qui est reliée à l'électrode,
- on commande l'interrupteur du premier poste de transmission de courant continu de haute tension, de manière à relier le premier pôle de la section de transmission de courant continu de haute tension à la ligne, qui n'est pas reliée à l'électrode, de façon à court-circuiter au moins un système de courant alternatif du premier poste de transmission de courant continu de haute tension et
- on commande les interrupteurs du deuxième poste de transmission de courant continu de haute tension, de manière
- à relier le au moins un système de courant alternatif du deuxième poste de transmission de courant continu de haute tension, qui n'est pas relié à l'électrode,
- de manière à interrompre la liaison à la ligne, qui est reliée à l'électrode.
